# EUROPÄISCHE PATENTSCHRIFT

(11) **EP 3 296 168 B1**
(45) Veröffentlichungstag und Bekanntmachung des Hinweises auf die Patenterteilung: **05.06.2019**
(21) Anmeldenummer: 17186363.2
(22) Anmeldetag: 16.08.2017
(51) Int. Cl.: B60S 3/00, B60S 3/04, G07F 17/20

(54) **FAHRZEUGBEHANDLUNGSANLAGE MIT ANWESENHEITSERKENNUNG**
VEHICLE TREATMENT SYSTEM WITH PRESENCE DETECTION
INSTALLATION DE TRAITEMENT DE VÉHICULES DOTÉE D'UN DISPOSITIF DE DÉTECTION DE PRÉSENCE

(30) Priorität: 15.09.2016 DE 102016117430
(43) Veröffentlichungstag der Anmeldung: 21.03.2018
(73) Patentinhaber: WashTec Holding GmbH, 86153 Augsburg (DE)
(72) Erfinder: KECHELE, Sven Christian, 86391 Stadtbergen (DE); FÖRG, Oliver, 86199 Augsburg (DE); SCHÖPP, Thomas, 86163 Augsburg (DE)
(74) Vertreter: Winter, Brandl, Fürniss, Hübner, Röss, Kaiser, Polte - Partnerschaft mbB

(56) Entgegenhaltungen:
- WO-A2-02/099579
- CN-U- 205 075 800
- CN-U- 205 554 150
- US-A1- 2005 234 569
- US-A1- 2006 229 891

## Beschreibung

Die Erfindung betrifft eine Fahrzeugbehandlungsanlage gemäß dem Oberbegriff des Anspruchs 1. Die CN 205 075 800 U offenbart eine solche Fahrzeugbehandlungsanlage.

Genauer gesagt handelt es sich um eine, insbesondere selbst bedienbare, Fahrzeugbehandlungsanlage, welche zumindest eine Behandlungsvorrichtung, ein berührungsempfindliches Bedienfeld zur Bedienung der Fahrzeugbehandlungsanlage sowie eine Steuerungsvorrichtung aufweist und welche entsprechend einer Eingabe oder äußeren Einwirkung über das Bedienfeld angesteuert wird.

In der Fahrzeugwaschtechnik kommen insbesondere bei Selbstbedienungsanlagen, aber auch an Vorwaschstationen von Waschstraßen oder Portalwaschanlagen Behandlungsvorrichtungen wie Hochdrucklanzen oder Schaumlanzen zum Einsatz, mit welchen man Wasser, Reinigungsmittel oder ein Mix aus beiden auf das zu reinigende Fahrzeug sprühen kann. In der Nähe solcher Fahrzeugbehandlungsanlagen befindet sich oftmals eine Bedieneinheit, über welche bei Selbstbedienungsanlagen durch den Kunden selbst und bei Waschstraßen in der Regel durch Bedienstete des Anlagenbetreibers die jeweilige Anlage bedient werden kann. Mit Hilfe dieser Bedieneinheiten können beispielsweise Waschprogramme (wie Intensiv-Vorreinigung, Shampoo, Wachs, Frischwasser und Osmosewasser über die Hochdrucklanze, Schaum über die Waschbürste) ausgewählt, die Bezahlung (mittels Münzen, Jetons, Transponderwaschkarten oder Codes) vorgenommen werden, die Anlage im Notfall gestoppt werden, etc.

Diese Bedieneinheiten weisen in der Regel mechanische Schalter, Folientastaturen, Drucktasten oder ähnliche Bedienelemente auf, welche in der Regel spritzwasserdicht oder sogar wasserdicht ausgestaltet sind.

Neben diesen herkömmlichen Bedienelementen kommen in der Fahrzeugwaschtechnik zur Bedienung der Anlagen vermehrt berührungsempfindliche Oberflächen, sogenannte Touchscreens oder Touchpanels zum Einsatz. Jedoch hat es sich gezeigt, dass die an sich bedienfreundlichen (kapazitiven, auf PCAP-Technik basierenden) Touchscreens in der Nähe von sprühenden Behandlungseinrichtungen nur bedingt einsetzbar sind, da solche berührungsempfindlichen Oberflächen durch Wasser negativ beeinflusst werden können, was zuweilen auch zu Fehlauslösungen bzw. nicht beabsichtigten Bedieneingaben führen kann. Gerade in der Nähe von den eingangs angesprochenen Behandlungsvorrichtungen kann ein Fluidstrahl oder Sprühnebel auf die Bedienoberfläche gelangen und fälschlicherweise als Eingabe erkannt werden.

Auch in allgemein feuchten bzw. leitfähigen Umgebungen sind solche Touchscreens empfindlich für Fehlauslösungen. Aus dem Stand der Technik sind einige Software-Algorithmen bekannt, welche sich der Problematik der Wassertropfenerkennung annehmen und eine Fehlauslösung durch Feuchtigkeit auf der Oberfläche zu verhindern suchen. Weiterhin werden Fehlauslösungen bei Touchscreens üblicherweise durch die Gestaltung der Elektroden, der Auswerteelektronik bzw. der Controller-Hardware entgegengewirkt. Diese Lösungen haben jedoch diverse Nachteile. Beispielsweise können hierdurch die 10-Finger-Bedienung oder die Handschuh-Bedienung eingeschränkt sein. Darüber hinaus besteht eine gewisse Unsicherheit in Bezug auf die Zuverlässigkeit der Software-Algorithmen, die insbesondere bei einem direkt auftreffenden Wasserstrahl fehleranfällig sind. Darüber hinaus sind die Bedieneinheiten von Fahrzeugbehandlungsanlagen im Gegensatz zu bei Verbraucherelektronik, wie Mobiltelefone, verwendeten Lösungen in der Regel neben Wasser auch chemischen Zusätzen ausgesetzt, die je nach chemischem Zusatz eine mehr oder minder erhöhte Leitfähigkeit mit sich bringen und deshalb sehr schwer software- oder hardware-technisch in den Griff zu bekommen sind.

Vor diesem Hintergrund besteht die Aufgabe der vorliegenden Erfindung darin, eine Fahrzeugbehandlungsanlage bereitzustellen, welche trotz Verwendung von berührungsempfindlichen Oberflächen an der Bedieneinheit bzw. berührungsempfindlichen Bedienfeldern Fehlauslösungen bzw. nicht beabsichtigte Eingaben über diese Oberflächen verhindern bzw. anders ausgedrückt die Zuverlässigkeit bei der Dateneingabe erhöhen.

Diese Aufgabe wird durch eine Fahrzeugbehandlungsanlage mit den Merkmalen des Anspruchs 1 gelöst. Vorteilhafte Weiterbildungen sind jeweils Gegenstand von Unteransprüchen.

Die erfindungsgemäße, insbesondere selbst bedienbare Fahrzeugbehandlungsanlage bzw. Fahrzeugreinigungsanlage weist eine oder mehrere Behandlungsvorrichtungen, wie eine Hochdrucklanze, Schaumlanze oder andere sprühende Vorrichtungen, und ein zugeordnetes berührungsempfindliches Bedienfeld bzw. eine Bedieneinheit mit einer berührungsempfindlichen Bedienoberfläche (kapazitives Touchpanel oder Touchscreen) zur Bedienung der Fahrzeugbehandlungsanlage auf. In einem ersten (normalen) Bedienmodus oder Betriebsmodus der Bedieneinheit steuert die Steuerungsvorrichtung die Fahrzeugbehandlungsanlage bzw. die hierfür maßgeblichen Komponenten, wie etwa eine Hochdruckpumpe, entsprechend einer Eingabe über die Bedieneinheit an bzw. setzt einen auf das Bedienfeld einwirkenden äußeren Einfluss in Befehle zur Steuerung der Behandlungsvorrichtung um. Erfindungsgemäß schaltet die Steuerungsvorrichtung in Abhängigkeit einer Anwesenheit oder Nichtanwesenheit bzw. Aufenthaltsorts einer Person im Bereich der Fahrzeugreinigungsanlage die Bedieneinheit in einen zweiten (funktional eingeschränkten) Bedienmodus oder Betriebsmodus. In dem zweiten Betriebsmodus hat eine von der Bedieneinheit erkannte Eingabe über die berührungsempfindliche Bedienoberfläche keinen oder einen lediglich eingeschränkten Einfluss auf die Ansteuerung der Fahrzeugbehandlungsanlage. Anders ausgedrückt lässt sich die Fahrzeugbehandlungsanlage im zweiten Betriebsmodus über die Bedieneinheit gar nicht oder nur eingeschränkt ansteuern oder bedienen. D.h., dass sich in Abhängigkeit des Aufenthaltsorts einer Person, genauer gesagt in Abhängigkeit davon, ob und wo sich eine Person relativ zur Bedieneinheit befindet, die Fahrzeugbehandlungsanlage, genauer gesagt die Bedieneinheit, in einem hinsichtlich der Bedienfunktionalität komplett deaktivierten oder eingeschränkten Betriebsmodus gebracht wird. Befindet sich überhaupt keine Person im Bereich der Fahrzeugbehandlungsanlage oder zumindest nicht in der Nähe der Bedieneinheit, dann wird davon ausgegangen, dass keine Eingabe über Bedienoberflächen erfolgen soll, weshalb die Bedieneinheit in den zweiten Betriebsmodus geschaltet werden kann.

In der Regel entfernt sich eine Person zur Fahrzeugbehandlung oder -reinigung von der Bedieneinheit und befindet sich während des Fahrzeugbehandlungs- oder -reinigungsvorgangs etwas weiter von der Bedieneinheit entfernt und nicht in unmittelbarer Nähe der Bedieneinheit. Deshalb ist es vorteilhaft, dass die Bedieneinheit in den zweiten Betriebsmodus geschaltet wird, nachdem die Person an der Bedieneinheit die Fahrzeugbehandlungsanlage durch Bezahlung und Waschprogrammauswahl aktiviert, anschließend eine bereitgestellte Behandlungsvorrichtung (Hochdrucklanze, Schaumlanze, etc.) gegriffen und sich schließlich dem Fahrzeug genähert (und gleichzeitig von der Bedieneinheit entfernt) hat. Dadurch kann verhindert werden, dass das von der Behandlungsvorrichtung abgegebene Fahrzeugbehandlungsmittel bzw. Reinigungsfluid, selbst dann, wenn es auf die Bedienoberfläche der Bedieneinheit gelangt, keine unbeabsichtigten Eingaben oder Befehle bewirkt, weshalb unbeabsichtigte Fehlauslösungen verhindert werden können. Befindet sich dagegen eine Person in der Nähe der Bedieneinheit oder unmittelbar vor der Bedieneinheit, dann wird davon ausgegangen, dass diejenige Person die Bedieneinheit, z.B. für einen Bezahlungsvorgang, zur Auswahl eines Waschprogramms, etc. zu bedienen beabsichtigt, weshalb die Bedieneinheit in diesen geschaltet wird (oder weiter im ersten Betriebsmodus belassen wird).

Die erfindungsgemäße Steuerungsvorrichtung ermöglicht somit durch ein Umschalten bzw. Ändern des Betriebsmodus oder der Bedienfunktionalität der Bedieneinheit die Verwendung von berührungsempfindlichen Bedienoberflächen in der feuchten Umgebung einer Fahrzeugbehandlungsanlage, ohne dabei befürchten zu müssen, des es zu wasserstrahl- oder sprühnebelbedingten Fehlauslösungen kommt.

Die erfindungsgemäße Steuerungsvorrichtung eignet sich sowohl für den Einsatz in Verbindung mit einer Selbstbedienungswaschstation als auch in Verbindung mit einer Waschstraße oder Portalwaschanlage mit beispielsweise einer Vorwasch- oder Finishingstation.

Gemäß einem Aspekt der Erfindung kann die Steuerungsvorrichtung in den zweiten Betriebsmodus schalten, wenn erkannt oder bestimmt wird, dass sich in einem vorbestimmten Bedienbereich vor der Bedieneinheit bzw. dem Bedienfeld keine Person aufhält. Bei dem vorbestimmten Bedienbereich kann es sich um einen vorbestimmten Abstandsbereich, insbesondere eine (Armlängen-)Abstandsbereich kleiner als 70cm, und/oder einen vorbestimmten Winkelbereich, insbesondere eine Winkelbereich von +30° bis -30° zu einer senkrecht durch die Bedienoberfläche verlaufenden Achse, relativ (vor) der Bedieneinheit handeln.

Gemäß einem Aspekt der Erfindung kann die Steuerungsvorrichtung den Aufenthaltsort der Person auf der Grundlage eines Erfassungsergebnisses eines in der Bedieneinheit, insbesondere in der Bedienoberfläche, integrierten (optischen) Annäherungssensors bestimmen.

Zusätzlich oder alternativ kann die Steuerungsvorrichtung anhand einer auf die Bedieneinheit gerichteten Kamera oder eines Radars, einer im Bedienbereich vor der Bedieneinheit vorgesehenen Lichtschranke, eines im Bedienbereich am oder im Boden vor der Bedieneinheit vorgesehenen Gewichtssensors. Zusätzlich oder alternativ kann auch ein in die Bedieneinheit (z.B. außerhalb der berührungsempfindlichen Oberfläche) integrierter Anwesenheitstaster vorgesehen sein, bei dessen Betätigung die Steuerungsvorrichtung erkennt, dass sich eine Person in der Nähe der Bedieneinheit befindet.

Als weiteres zusätzliches Kriterium (neben der Entfernung von der Bedieneinheit) zum Schalten der Bedieneinheit in den zweiten Bedienmodus kann eine Fahrzeugmittelbehandlungsabgabe durch eine Behandlungsvorrichtung hinzukommen. Somit kann die Bedieneinheit solange in dem ersten Bedienmodus belassen werden, bis die Behandlungsvorrichtung tatsächlich benutzt wird, da erst dann Gefahr einer Fehlauslösung besteht.

Eine Fahrzeugbehandlungsmittelabgabe der Behandlungsvorrichtung kann erfindungsgemäß auf diverse Arten bestimmt werden. Diese können unabhängig und miteinander kombiniert verwendet werden. Erfindungsgemäß kann die Steuerungsvorrichtung eine Fahrzeugbehandlungsmittelabgabe der Behandlungsvorrichtung mittels einer hydraulischen Druckmessung, einer Durchflussratenmessungen, einer Temperaturmessung oder einer Ventilschaltstellungserkennung in einer zur Behandlungsvorrichtung führenden Leitung, einer Ventilschaltstellungserkennung in einer Überdruckrücklaufleitung, einer Schaltstellungserkennung eines Betätigungselements an der Behandlungsvorrichtung, z. B. am Griff der Hochdrucklanze, oder einer Strommessung des einer Behandlungsmittelpumpe zugeführten Stroms erkennen.

Gemäß einem Aspekt der Erfindung deaktiviert die Steuerungsvorrichtung im zweiten Betriebsmodus die Oberfläche insgesamt oder zumindest vorbestimmte Eingabefelder. Alternativ können die Bedienoberfläche bzw. die Eingabefelder ausgeblendet werden. Alternativ können auch die von der Bedieneinheit als solche erkannte Eingaben von der Steuerungsvorrichtung nicht weiter verarbeitet werden. All diese Varianten stellen sicher, dass es zu keiner unbeabsichtigten Fehlauslösung im Bereich der Bedieneinheit kommt. Eine Deaktivierung oder Ausblendung einzelner Eingabefelder ermöglicht jedoch eine Differenzierung hinsichtlich der Relevanz der jeweiligen Eingabefelder, so dass unkritische Felder, wie Informationsfelder, weiterhin angezeigt und aktiviert bleiben können, während kritische Felder, wie Eingabefelder, z.B. zur Auswahl von Waschprogrammen, deaktiviert werden können.

Gemäß einem Aspekt kann sich der Betriebsmodus in einem ersten Fall, in dem sich eine Person zwar in der Fahrzeugbehandlungsanlage, jedoch nicht in dem vorbestimmten Bereich vor dem Bedienfeld befindet, und in einem zweiten Fall, in dem sich überhaupt keine Person in der Fahrzeugbehandlungsanlage befindet, unterscheiden. So kann beispielsweise im ersten Fall, das Bedienfeld gegenüber dem ersten Betriebsmodus nur in seiner Bedien- und Anzeigeinformation verändert sein, während im zweiten Fall das Bedienfeld komplett deaktiviert oder ausgeschaltet sein kann.

Gemäß einem Aspekt der Erfindung kann eine Anzeigevorrichtung vorgesehen sein, die im zweiten Betriebsmodus, vorzugsweise ausschließlich, Informationen, wie Restlaufzeit, ausgewähltes Behandlungsprogramm, Behandlungsanleitungen oder Hinweise, oder andere Informationen, die keine Auswahl- oder Eingabemöglichkeit bieten, anzeigt. Dies bietet gegenüber einer kompletten Deaktivierung oder Ausblendung des Displays den Vorteil, dass dem Anwender zwar keine Auswahl- oder Bedienfunktionalität bereitgestellt wird, jedoch für ihn wichtige Informationen angezeigt werden können. Im zweiten Betriebsmodus können nicht nur Eingabe- und/oder Informationsfelder ausgeblendet, sondern auch aktiv eingeblendet und/oder deren Größe oder Aussehen verändert werden. Beispielsweise kann im zweiten Modus die Restwertanzeige vergrößert werden, so dass der Kunde während des Vorgangs auch von größerer Entfernung sein Restguthaben bzw. seine noch verbleibende Behandlungszeit gut erkennen kann.

Gemäß einem Aspekt der Erfindung kann die Steuerungsvorrichtung die Bedieneinheit von dem zweiten Betriebsmodus in den ersten Betriebsmodus schalten, wenn nach Aktivierung der Fahrzeugbehandlungsanlage eine vorbestimmte oder für den Benutzer vorgegebene Zeit abgelaufen ist oder wenn das Guthaben des Benutzers verbraucht ist und die Anlage aufgrund dessen gestoppt wird. Das automatische Umschalten von dem zweiten Betriebsmodus in den ersten Betriebsmodus ist insofern vorteilhaft, dass der Kunde oder Anwender nach Beendigung eines Behandlungsvorgangs ohne Zeitverzug sofort die volle Bedienfunktionalität verfügbar hat.

### Nachstehend wird anhand schematischer Zeichnungen ein bevorzugtes Ausführungsbeispiel beschrieben

Es zeigen:
Figur 1 eine perspektivische Ansicht einer sogenannten Selbstbedienungsanlage mit mehreren Fahrzeugbehandlungsanlagen gemäß einer Ausführungsform der Erfindung;
Figur 2 eine einzelne Fahrzeugbehandlungsanlage mit einer Bedieneinheit und Behandlungsvorrichtungen gemäß der Ausführungsform der Erfindung;
Figur 3 eine Bedieneinheit gemäß dem Stand der Technik;
Figur 4 eine Bedieneinheit gemäß der Ausführungsform der Erfindung;
Figur 5 einen schematischen Aufbau der Fahrzeugbehandlungsanlage gemäß der Ausführungsform der Erfindung;
Figur 6 einen Ablaufplan einen Steuerungsverfahrens gemäß der Ausführungsform der Erfindung;
Figur 7 einen Ablaufplan eines modifizierten Steuerungsverfahrens gemäß der Ausführungsform der Erfindung; und
Figur 8 eine Übersicht verschiedener Erfassungseinrichtungen in Fahrzeugbehandlungsanlagen gemäß der Ausführungsform der Erfindung.

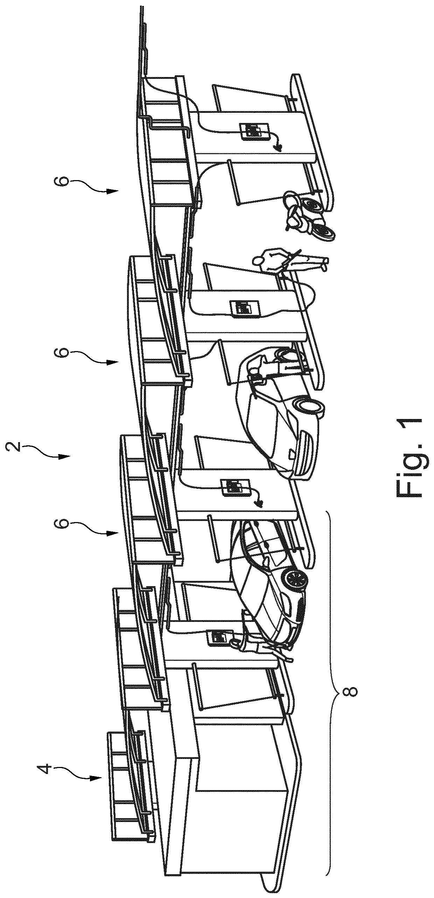

Die Fig. 1 zeigt eine perspektivische Ansicht einer sogenannten Selbstbedienungs-(SB-)Waschanlage 2 mit einem zentralen Technikmodul oder Technikcontainer 4 und mehreren (einer Vielzahl an) Waschplätzen 6. In dem Technikmodul 4 sind alle Komponenten für den Betrieb der Waschplätze 6, wie z. B. Pumpe, Wasseraufbereitung einschließlich Heizung, Reinigungschemie, etc., untergebracht. Jeder Waschplatz 6 bildet zusammen mit dem zentralen Technikmodul 4 jeweils eine Fahrzeugbehandlungsanlage 8. Jeder Waschplatz 6 bzw. jede Fahrzeugbehandlungsanlage 8 verfügt über eine eigene Bedieneinheit 10 und eine und mehrere Behandlungsvorrichtungen wie eine Hochdrucklanze 12, eine Schaumlanze 14 oder -pistolen und eine Waschbürste 16, welche jeweils über entsprechende Schläuche und Leitungen vom Technikmodul 4 aus mit einem entsprechenden Behandlungsmittel versorgt werden. Hierbei unterscheiden sich das Behandlungsmittel und auch der Druck in Abhängigkeit der Behandlungsvorrichtung bzw. des Waschprogramms. So werden beispielsweise die Schaumlanze 14 zur Vorwäsche, die Hochdrucklanze 12 und die Waschbürste 16 zur Hauptwäsche und die Hochdrucklanze 12 zum abschließenden Spülen verwendet.

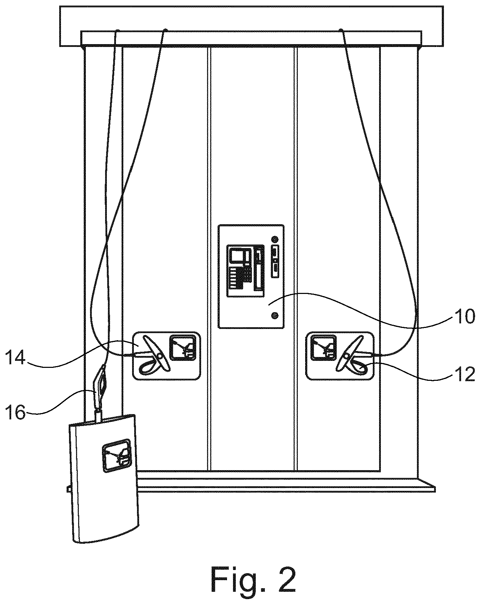

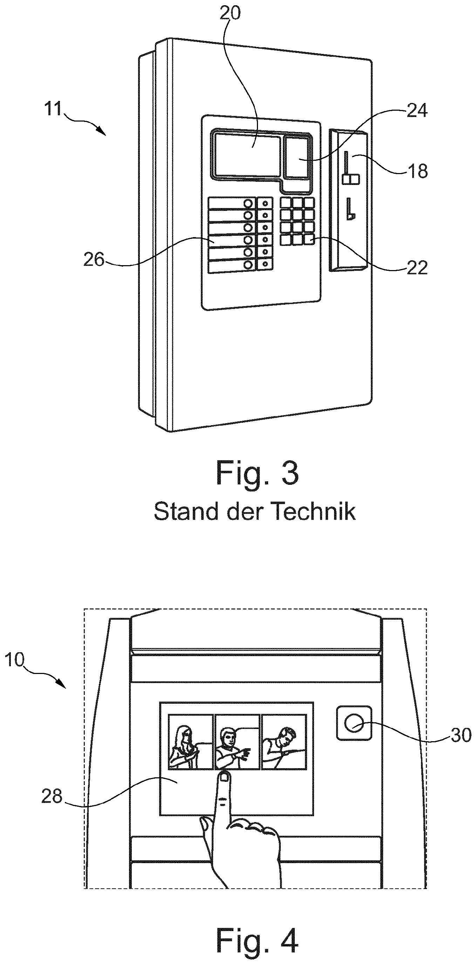

In der Fig. 2 ist ebenfalls eine Bedieneinheit 11 zu erkennen, wobei es sich hierbei um eine Bedieneinheit 11 aus dem Stand der Technik handelt, welche anstelle einer berührungsempfindlichen Oberfläche Druckknöpfe als Bedienelemente aufweist. Diese Bedieneinheit 10 ist nochmals in der Fig. 3 vergrößert dargestellt.

Die Bedieneinheit 11 verfügt über einen über eine Schutzklappe vor Spritzwasser geschützten Münzeinwurf 18, eine Restgeldanzeige 20, eine numerische Tastatur 22 zum Eingeben von Nummerncodes oder zum Bestätigen der Eingabe, ein Transponderfeld 24 zum Bezahlen mittels einer Transponderwaschkarte sowie eine Waschprogrammanzeige bzw. -anleitung 26, anhand welcher der Kunde das jeweilige Waschprogramm auswählen bzw. hierfür eine Hilfestellung erfahren kann.

Die Fig. 4 zeigt dagegen eine erfindungsgemäße Bedieneinheit 10 mit einem Bedienfeld 28, welches mit einer berührungsempfindlichen Oberfläche, genauer gesagt einer kapazitiven Oberfläche bzw. eine Bedienoberfläche, die auf PCAP-Technik basiert, über welche der Benutzer bzw. Kunde mit einem oder mehreren Finger (ggf. Handschuhen) durch das ihm angezeigte Bedienmenü navigieren und Eingaben vornehmen bzw. bestätigen kann. Hierbei bietet das Bedienfeld 28 zumindest die oben in Verbindung mit der Bedieneinheit 11 der Fig. 3 beschriebenen Funktionalitäten. Außerhalb des Bedienfelds 28 ist ein mechanischer Notausschalter 30 vorgesehen, durch dessen Betätigung der momentane Waschvorgang bzw. die Fahrzeugbehandlungsanlage 8 gestoppt werden kann.

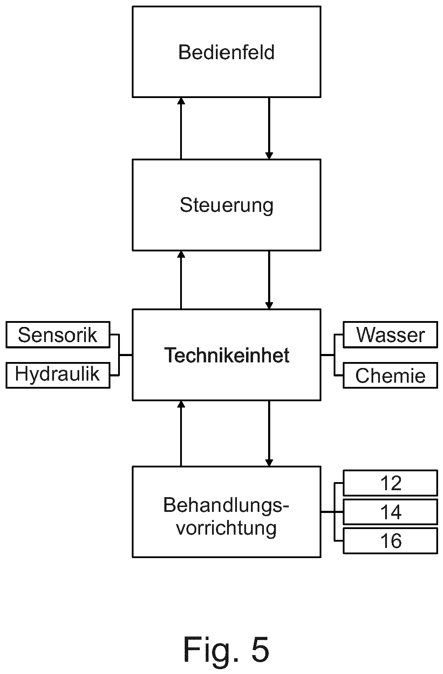

Fig. 5 zeigt ein Schaubild, welches prinzipiell die Funktionsweise der Fahrzeugbehandlungsanlage 8 darstellt. Die über das Bedienfeld 28 vorgenommenen Eingaben werden an eine Steuerungsvorrichtung 32 weitergeleitet und dort verarbeitet, das Technikmodul 4 und die damit verbundenen Behandlungsvorrichtungen (Hochdrucklanze 12, Schaumlanze 14 und Waschbürste 16) entsprechend von der Steuerungsvorrichtung 32 angesteuert, und Signale von diversen Sensoren im Technikmodul 4, den Behandlungsvorrichtungen und den dazwischenliegenden Leitungen an die Steuerungsvorrichtung 32 weitergegeben, woraufhin die Steuerungsvorrichtung 32 die Bedieneinheit 10 bzw. das Bedienfeld 28 entsprechend ansteuert.

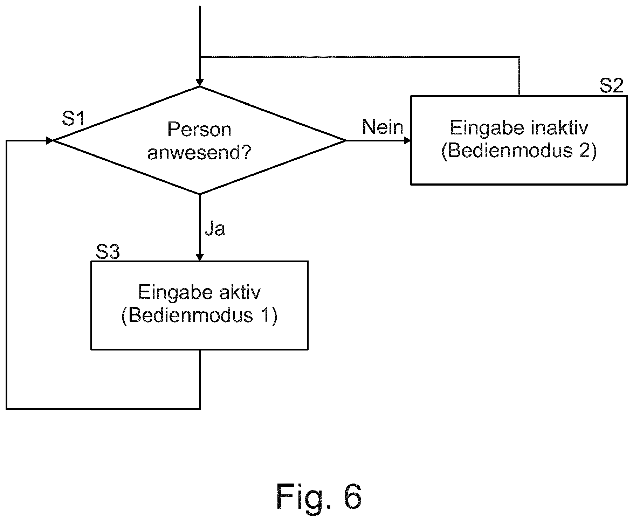

Mit Bezug auf die Fig. 6 wird die Ansteuerung des Bedienfelds 28 näher beschrieben.

In Schritt S1 wird bestimmt, ob eine Person anwesend ist, genauer gesagt sich in unmittelbarer Nähe bzw. einem vorbestimmten Bedienbereich vor der Bedieneinheit 10 bzw. dem Bedienfeld 28 befindet. Falls dies verneint wird, wird in Schritt S2 das Bedienfeld 28 inaktiv geschaltet bzw. in den zweiten (beschränkten) Betriebsmodus geschaltet, da davon ausgegangen werden kann, dass sich entweder gar keine Person in der Fahrzeugbehandlungsanlage 8 befindet und somit das Bedienfeld 28 zur Reduzierung des Stromverbrauchs deaktiviert werden kann oder sich eine Person womöglich in der Fahrzeugbehandlungsanlage befindet, momentan mit einer der Behandlungsvorrichtungen das Fahrzeug behandelt und es somit gilt, die Bedienoberfläche 28 vor spritzwasserbedingten Fehlauslösungen zu schützen. Wird hingegen in Schritt S1 festgestellt, dass sich eine Person vor der Bedieneinheit 10 bzw. dem Bedienfeld 28 befindet, wird die Bedieneinheit in den ersten (normalen) Betriebsmodus geschaltet, so dass der Kunde über die Bedienoberfläche 28 Eingaben, wie Bezahlung und Auswahl eines Waschprogramms vornehmen kann. Die Bedieneinheit 10 bleibt solange im aktiven Zustand, solange sich eine Person vorder Bedieneinheit 10 befindet.

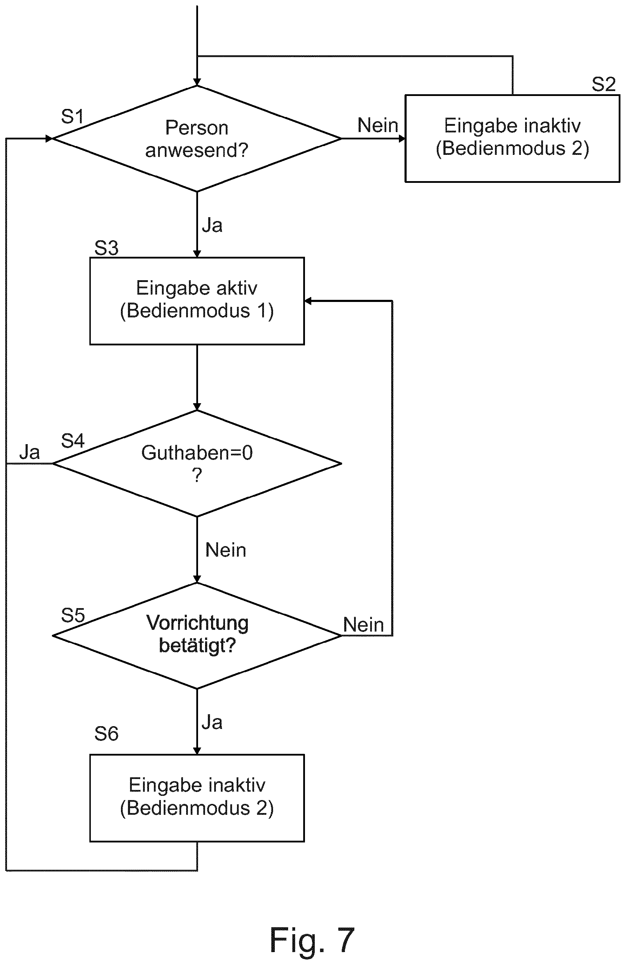

Mit Bezug auf die Fig. 7 wird eine modifizierte Ansteuerung des Bedienfelds 28 durch die Steuerung 32 beschrieben, wobei die Schritte S1, S2 und S3 identisch sind und deshalb nur auf die Unterschiede eingegangen wird. Wenn sich die Bedieneinheit im ersten Betriebsmodus befindet bzw. in Schritt S3 in diesen geschaltet wurde, wird anschließend in Schritt S4 überprüft, ob ausreichend Guthaben vorhanden ist. Falls das Guthaben vollständig verbraucht ist, endet der Prozess und kehrt zu Schritt S1 zurück. Falls in Schritt S4 festgestellt wird, dass noch Guthaben vorhanden ist, wird im anschließenden Schritt S5 bestimmt, ob eine der Behandlungsvorrichtungen (Hochdrucklanze 12, Schaumlanze 14, ggf. Waschbürste 16) betätigt wird. Falls dies verneint wird, bleibt die Eingabe aktiv bzw. Bedieneinheit 10 im ersten Betriebsmodus und kehrt zu Schritt S3 zurück. Wird dagegen festgestellt, dass eine der Behandlungsvorrichtungen betätigt wird, wird das Eingabe- bzw. Bedienfeld 28 inaktiv geschaltet bzw. die Bedieneinheit in den zweiten Betriebsmodus geschaltet, in welchem die Bedienfunktionalität deaktiviert ist, so dass es zu keinen spritzwasserbedingten Fehlauslösungen über die berührungsempfindliche Oberfläche des Bedienfelds 28 kommt. Daraufhin kehrt der Prozess wieder zu Schritt S1 zurück, so dass die Eingabe solange deaktiviert bzw. im zweiten Betriebsmodus bleibt, bis sich eine Person wieder der Bedieneinheit nähert.

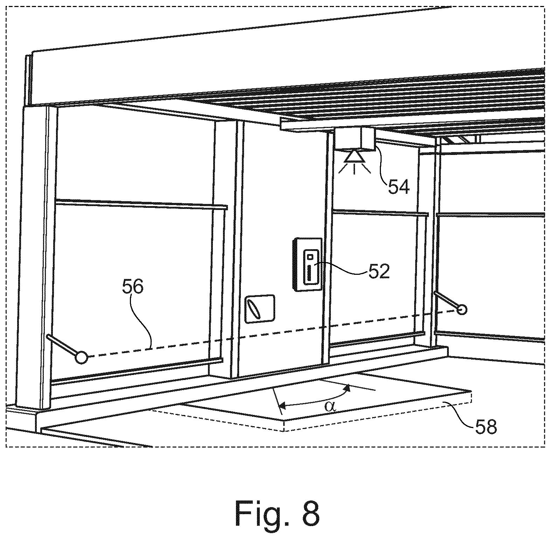

Zum Orten einer Person in der Fahrzeugbehandlungsanlage 8 können diverse Erfassungseinrichtungen einzeln oder in Kombination vorgesehen sein, welche mit Bezug auf die Fig. 8 beschrieben werden. Beispielsweise kann in der Bedieneinheit 10 bzw. in dem Bedienfeld 28 ein Näherungssensor 52 integriert sein, welcher eine unmittelbar vor der Bedieneinheit stehende Person erfassen kann.

Zusätzlich oder alternativ kann beispielsweise oberhalb der Bedieneinheit 10 oder an sonstiger geeigneter Stelle in der Fahrzeugbehandlungsanlage 8 eine auf die Bedieneinheit 10 bzw. den Bereich vor der Bedieneinheit 10 gerichtete Kamera 54 vorgesehen sein und die Steuerungsvorrichtung 32 durch entsprechende Bilderkennungsalgorithmen auf der Grundlage der von der Kamera 54 aufgenommenen Bilder eine Personenerkennung durchführen. Die Kamera 54 kann auch in der Bedieneinheit 10 integriert sein. Diese kann zusätzlich eine Gesichtserkennung durchführen. Anstelle der Kamera 54 kann auch ein Radar in der Fahrzeugbehandlungsanlage 8 vorgesehen sein.

Als weitere Möglichkeit kann vor der Bedieneinheit 10 eine Lichtschranke 56 installiert sein, um so ebenfalls feststellen zu können, ob eine Person diesen Bereich vor der Bedieneinheit 10 betritt oder verlässt.

Schließlich kann auch innerhalb des Bedienbereichs vor der Bedieneinheit 10 auf oder in dem Boden ein Gewichtssensor 58 verbaut sein, der anhand von Gewichtsmessungen eine sich vor der Bedieneinheit 10 befindliche Person erfassen kann.

Vorzugsweise ist der zu überwachende Bedienbereich bzw. der Bereich, welcher maßgeblich für das Schalten zwischen dem ersten und dem zweiten Betriebsmodus ist, hinsichtlich Abstand und/oder seitlichen Abweichungen begrenzt. Beispielsweise kann dieser Bereich auf eine durchschnittliche Armlänge einer Person begrenzt sein, d.h. ein Bereich von < 70 cm in Radius- oder Kantenlänge d, gemessen von der Bedieneinheit 10. Der Winkelbereich α kann auf ± 45°, vorzugsweise ± 30°, links und rechts der Bedieneinheit 10 beschränkt sein.

Wird festgestellt, dass sich überhaupt keine Person in dem Waschplatz 6 bzw. der Fahrzeugbehandlungsanlage 8 befindet, kann die Bedieneinheit 10 oder nur das Bedienfeld 28 ausgeschaltet werden.

Die Erfindung wurde anhand einer bevorzugten Ausführungsform beschrieben, ist jedoch nicht auf diese beschränkt. Beispielsweise kann die Bedieneinheit 10 auch in einer Waschstraße oder einer Portalwaschanlage vorgesehen sein, in denen beispielsweise zur Vorwäsche ebenfalls Hochdruck- oder Schaumlanzen 12, 14 zum Einsatz kommen. Darüber hinaus kann die Steuerungsvorrichtung 32 für die Steuerung mehrerer Bedieneinheiten 10 oder lediglich für eine Einzelplatzbedieneinheit 10 ausgerichtet sein.

Bei der Erfassung eines Aufenthaltsorts einer Person waren die zuvor beschriebenen Erfassungsvorrichtungen alle auf den Bereich vor der Bedieneinheit 10 gerichtet. Alternativ oder zusätzlich kann jedoch auch der restliche Bereich, in dem üblicherweise das zu behandelnde Fahrzeug steht und sich die Person während des Behandlungsvorgangs aufhält, überwacht werden und, falls sich in diesem Bereich eine Person befindet, die Bedieneinheit 10 in den zweiten Betriebsmodus geschaltet werden.

Bei Fahrzeugen werden zunehmend Fahrzeugschlüssel eingesetzt, welche kontaktlos bzw. über eine Funk- oder Datenverbindung, mittels RFID-Technologie, etc. mit dem Fahrzeug kommunizieren, z.B. zum Öffnen oder Verschließen der Tür, zum Starten des Fahrzeugs, etc. Diese Signale können auch durch entsprechend in der Fahrzeugbehandlungsanlage oder der Bedieneinheit verbaute Sensoren oder Sende- bzw. Empfängermodule detektiert werden, um zu bestimmten, ob und wo sich eine Person in der Fahrzeugbehandlungsanlage bzw. vor der Bedieneinheit befindet. Anhand dessen kann in den ersten bzw. zweiten Bedienmodus umgeschaltet werden.

Das Bedienfeld kann im zweiten Betriebsmodus unmittelbar oder nach einer vorbestimmten Zeit nach Umschalten in den zweiten Bedienmodus in einen Energiesparmodus mit oder ohne Bildschirmschoner geschaltet werden.

### Bezugszeichenliste

Selbstbedienungs-(SB-)Waschanlage 2
Technikeinheit 4
Waschplätze 6
Fahrzeugbehandlungsanlage 8
Bedieneinheit 10
Bedieneinheit 11
Hochdrucklanze 12
Schaumlanze 14
Waschbürste 16
Münzeinwurf 18
Restgeldanzeige 20
Tastatur 22
Transponderfeld 24
Waschprogrammanzeige bzw. -anleitung 26
Bedienfeld 28
Notausschalter 30
Steuerungsvorrichtung 32
Hochdruckpumpe 34
Leitung 36
Handgriffschalter 38
Überdruckventil 40
Überdruckrücklauf 42
Ventilschalter 44
Durchflussratenmesser 46
Druckmesser 48
Temperaturmesser 50
Näherungssensor 52
Kamera 54
Lichtschranke 56
Gewichtssensor 58

## Patentansprüche

1. Fahrzeugbehandlungsanlage (8), insbesondere selbstbedienbare Fahrzeugbehandlungsanlage (8), mit:
zumindest einer Behandlungsvorrichtung (12, 14, 16);
einem berührungsempfindlichen Bedienfeld (28) zur Bedienung der Fahrzeugbehandlungsanlage (8); und
einer Steuerungsvorrichtung (32), die konfiguriert ist, in einem ersten Betriebsmodus einen auf das Bedienfeld (28) einwirkenden äußeren Einfluss in Befehle zur Steuerung der zumindest einen Behandlungsvorrichtung (12, 14, 16) umzusetzen,
**gekennzeichnet durch**:
eine Erfassungseinrichtung (52, 54, 56, 58) zum Erfassen der Anwesenheit oder Nichtanwesenheit eines Benutzers in einem vordefinierten Bereich in der Fahrzeugbehandlungsanlage (8), wobei
die Steuervorrichtung (32) bei Nichtanwesenheit des Benutzers im vordefinierten Bereich in einen zweiten Betriebsmodus schaltet, in dem der äußere Einfluss keine Auswirkung auf die von der Steuerungsvorrichtung (32) ausgegebenen Befehle hat.

2. Fahrzeugbehandlungsanlage (8) nach Anspruch 1, **dadurch gekennzeichnet, dass** der vorbestimmte Bereich ein vorbestimmter Winkelbereich (a), insbesondere ± 45 Grad, und/oder Abstandsbereich (d), insbesondere kleiner oder gleich 70cm, zum Bedienfeld (28) ist.

3. Fahrzeugbehandlungsanlage (8) nach Anspruch 1 oder 2, **dadurch gekennzeichnet, dass** die Erfassungseinrichtung ein, insbesondere in dem Bedienfeld (28), integrierter Annäherungssensor (52), eine auf das Bedienfeld (28) oder den Bedienbereich vor dem Bedienfeld (28) gerichtete Kamera (54), eine im vorbestimmten Bereich vor dem Bedienfeld vorgesehene Lichtschranke (56) und/oder ein auf oder im Boden im vorbestimmten Bereich vor der dem Bedienfeld (28) vorgesehener Gewichtssensor (58) ist.

4. Fahrzeugbehandlungsanlage (8) nach einem der vorhergehenden Ansprüche, **dadurch gekennzeichnet, dass** die Steuerungsvorrichtung (32) eine Anzeigevorrichtung hat, die im zweiten Betriebsmodus das Bedienfeld (28) insgesamt oder zumindest vorbestimmte Eingabefelder ausblendet und/oder vorbestimmte Informationsfelder einblendet.

5. Fahrzeugbehandlungsanlage (8) nach Anspruch 4, **dadurch gekennzeichnet, dass** die Anzeigevorrichtung im zweiten Betriebsmodus, vorzugsweise ausschließlich, Informationen, insbesondere eine Restlaufzeit, ein ausgewähltes Behandlungsprogramm oder Behandlungsanleitungen oder -hinweise, anzeigt.

6. Fahrzeugbehandlungsanlage (8) nach einem der vorhergehenden Ansprüche, **dadurch gekennzeichnet, dass** die Steuerungsvorrichtung (32) von dem zweiten Betriebsmodus in den ersten Betriebsmodus schaltet, wenn nach Aktivierung der Fahrzeugbehandlungsanlage (8) eine vorbestimmte oder für den Benutzer vorgegebene Zeit abgelaufen oder ein Bezahlguthaben des Benutzers verbraucht ist.

7. Fahrzeugbehandlungsanlage (8) nach einem der vorhergehenden Ansprüche, **dadurch gekennzeichnet, dass** im zweiten Betriebsmodus ein Energiesparmodus oder Bildschirmschoner aktiviert ist.

## Claims

1. Vehicle treatment system (8), in particular self-service vehicle treatment system (8), comprising:
at least one treatment device (12, 14, 16);
a touch-sensitive operator panel (28) for operating the vehicle treatment system (8); and
a control device (32) configured to convert, in a first operating mode, an external influence acting on the operator panel (28) into instructions for controlling the at least one treatment device (12, 14, 16),
**characterized by**:
a detection device (52, 54, 56, 58) for detecting the presence or absence of a user in a predetermined area in the vehicle treatment system (8), wherein
the control device (32) switches to a second operating mode when the user is absent in the predetermined area, in which the external influence has no effect on the instructions issued by the control device (32).

2. Vehicle treatment system (8) according to claim 1, **characterized in that** the predetermined area is a predetermined angle range (a), in particular ± 45 degrees, and/or a distance range (d), in particular less than or equal to 70 cm, to the operator panel (28).

3. Vehicle treatment system (8) according to claim 1 or 2, **characterized in that** the detection device is an integrated proximity sensor (52), in particular integrated in the operator panel (28), a camera (54) directed at the operator panel (28) or the operating area in front of the operator panel (28), a light barrier (56) provided in the predetermined area in front of the operator panel, and/or a weight sensor (58) provided on or in the ground in the predetermined area in front of the operator panel (28).

4. Vehicle treatment system (8) according to one of the preceding claims, **characterized in that** the control device (32) has a display device which, in the second operating mode, hides the entire operator panel (28) or at least predetermined input fields, and/or displays predetermined information fields.

5. Vehicle treatment system (8) according to claim 4, **characterized in that** the display device in the second operating mode displays, preferably exclusively, information, in particular a remaining time, a selected treatment program, or treatment instructions or notices.

6. Vehicle treatment system (8) according to one of the preceding claims, **characterized in that** the control device (32) switches from the second operating mode to the first operating mode when, after activation of the vehicle treatment system (8), a predetermined time or a time preset for the user has elapsed or a payment credit of the user has been used up.

7. Vehicle treatment system (8) according to one of the preceding claims, **characterized in that** a power saving mode or screen saver is activated in the second operating mode.

## Revendications

1. Installation de traitement de véhicule (8), en particulier installation de traitement de véhicule (8) en libre-service, avec :
- au moins un dispositif de traitement (12, 14, 16) ;
- un panneau de commande tactile (28) destiné à contrôler l'installation de traitement de véhicule (8) ; et
- un dispositif de contrôle (32), qui est configuré pour, dans un premier mode de fonctionnement, convertir une influence extérieure agissant sur le panneau de commande (28) en instructions destinées à contrôler l'au moins un dispositif de traitement (12, 14, 16),
**caractérisée par** :
un dispositif de détection (52, 54, 56, 58) destiné à détecter la présence ou l'absence d'un utilisateur dans une zone prédéfinie dans l'installation de traitement de véhicule (8),
dans laquelle, en l'absence de l'utilisateur dans la zone prédéfinie, le dispositif de contrôle (32) passe dans un deuxième mode de fonctionnement dans lequel l'influence extérieure n'a pas d'effet sur les instructions délivrées par le dispositif de contrôle (32).

2. Installation de traitement de véhicule (8) selon la revendication 1, **caractérisée en ce que** la zone prédéterminée est une plage angulaire prédéterminée (a), en particulier ±45°, et/ou une plage de distance (d), en particulier inférieure ou égale à 70 cm, par rapport au panneau de commande (28).

3. Installation de traitement de véhicule (8) selon la revendication 1 ou 2, **caractérisée en ce que** le dispositif de détection est un capteur de proximité (52) intégré, en particulier dans le panneau de commande (28), une caméra (54) orientée sur le panneau de commande (28) ou sur la zone de commande devant le panneau de commande (28), un barrage photoélectrique (56) prévu dans la zone prédéterminée devant le panneau de commande et/ou un capteur de poids (58) prévu dans le sol dans la zone prédéterminée devant le panneau de commande (28).

4. Installation de traitement de véhicule (8) selon l'une quelconque des revendications précédentes, **caractérisée en ce que** le dispositif de contrôle (32) a un dispositif d'affichage qui, dans le deuxième mode de fonctionnement, fait disparaître ou apparaître globalement le panneau de commande (28) ou au moins des champs d'entrée prédéterminés et/ou des champs d'informations prédéterminés.

5. Installation de traitement de véhicule (8) selon la revendication 4, **caractérisée en ce que** le dispositif d'affichage affiche dans le deuxième mode de fonctionnement, de préférence exclusivement, des informations, en particulier un temps d'utilisation restant, un programme de traitement sélectionné ou des instructions ou conseils de traitement.

6. Installation de traitement de véhicule (8) selon l'une quelconque des revendications précédentes, **caractérisée en ce que** le dispositif de contrôle (32) passe du deuxième mode de fonctionnement au premier mode de fonctionnement lorsque, après l'activation de l'installation de traitement de véhicule (8), un temps prédéterminé ou prescrit pour l'utilisateur est écoulé ou un avoir de l'utilisateur est épuisé.

7. Installation de traitement de véhicule (8) selon l'une quelconque des revendications précédentes, **caractérisée en ce que**, dans le deuxième mode de fonctionnement, un mode d'économie d'énergie ou économiseur d'écran est activé.
